Europäisches Patentamt

European Patent Office

Office européen des brevets

(19)

(11) Veröffentlichungsnummer: **0 038 084**
**B1**

(12) EUROPÄISCHE PATENTSCHRIFT

(45) Veröffentlichungstag der Patentschrift: **07.08.85**

(51) Int. Cl.⁴: **B 29 C 35/02**

(21) Anmeldenummer: **81102909.9**

(22) Anmeldetag: **15.04.81**

(54) Verfahren zum Behandeln einer festen Folienbahn.

(30) Priorität: **16.04.80 EP 80102035**

(43) Veröffentlichungstag der Anmeldung:
**21.10.81 Patentblatt 81/42**

(45) Bekanntmachung des Hinweises auf die
Patenterteilung:
**07.08.85 Patentblatt 85/32**

(84) Benannte Vertragsstaaten:
**AT BE CH DE FR GB LI SE**

(56) Entgegenhaltungen:
**DE-A-1 404 471**
**DE-A-1 629 802**
**DE-A-2 038 718**
**DE-A-2 233 258**
**DE-A-2 401 960**
**DE-A-2 730 522**
**DE-B-1 504 030**
**DE-B-1 783 088**
**GB-A-1 140 175**

(73) Patentinhaber: **Pagendarm, Erich**
**Adalbertstrasse 5**
**D-2000 Hamburg 52 (DE)**

(72) Erfinder: **Pagendarm, Erich**
**Adalbertstrasse 5**
**D-2000 Hamburg 52 (DE)**

(74) Vertreter: **Glawe, Delfs, Moll & Partner**
**Patentanwälte**
**Rothenbaumchaussee 58 Postfach 2570**
**D-2000 Hamburg 13 (DE)**

Courier Press, Leamington Spa, England.

**Beschreibung**

Die Erfindung bezieht sich auf ein Verfahren zum Behandeln einer Folienbahn innerhalb eines engen Temperaturintervalls nahe ihrer Erweichungstemperatur unter Wärmezufuhr, bei dem die Folie im festen Zustand auf eine die Benhandlungstemperatur aufweisende Trägerfläche aufgeführt, flach auf der mit ihr bewegten Trägerfläche aufliegend in Behandlungstemperaturintervall gehalten und nach der Behandlung wieder abgeführt wird.

Bei manchen Verfahren zur Veredelung von Kunststoff-folien oder Folienbeschichtungen können einerseits Temperaturänderungen oder chemische Änderungen im Folienmaterial zu Änderungen des Dehnungszustands der behandelten Bahn führen, während andererseits gewisse Grenztemperaturen einzuhalten sind. Wenn beispielsweise der die Folienbahn bildende Kunststoff unter der Wirkung von Strahlung vernetzt werden soll, wird der Bahn durch die Strahlung Energie zugeführt, die sich in Temperaturerhöhung äußert. Bei anderen Behandlungsverfahren wird Wärme abgeführt, beispielsweise bei der Trocknung. Bei wider anderen Behandlungsverfahren wird an oder in der Folie als Folge der Behandlung Wärme erzeugt oder verbraucht. Während diese Vorgänge zu Temperaturänderungen führen, ist es häufig erforderlich, die Temperatur der Folie in gewissen Grenzen zu halten. Beispielsweise kann man die Vernetzung des Folienwerkstoffs durch Anhebung der Temperatur und damit der Reaktionsgeschwindigkeit beschleunigen, wobei man sich einer Grenzgeschwindigkeit nähern möchte, die ohne Gefährdung der Folienqualität nicht überschritten werden darf. Der Abstand, den man von dieser Grenztemperatur einhalten muß, wird dabei von der Sicherheit der Temperaturlenkung bestimmt und damit auch von der Fähigkeit, die aufgrund der Behandlung in oder an der Folie entstehenden Temperaturerhöhungen bzw. -senkungen schnellstens auszugleichen. Dieser Temperierung dient — neben dem Zweck der Förderung — die Trägerfläche, auf der die zu behandelnde Folienbahn flach aufliegt. Unter der flachen Auflage ist in diesem Zusammenhang eine völlig gleichmäßige Auflage der Folienbahn auf der Trägerfläche zu verstehen, die zum einen im Hinblick auf einen gleichmäßigen Wärmeübergang für die Zwecke der Temperierung und zum anderen im Hinblick auf die Formhaltung der Folienbahn enforderlich ist. Die flache Auflage wird aber durch Änderungen des Dehnungszustands der Folie gefährdet. Wenn sich die Folie beispielsweise durch Erwärmung ausdehnt, können Wellen enstehen, in denen die Folie den unmittelbaren Kontakt mit der Trägerfläche verliert, womit auch der temperierende Einfluß der Trägerfläche verlorengeht. Umgekehrt führt Schrumpfung zu ungleichmäßiger Lageänderung der Bahn auf der Trägerfläche, die irreversible Gestaltänderung zur Folge haben kann. Weil bislang die Wünsche nach genauer Temperierung bei gleichmäßiger Auflage der Bahn auf der Trägerfläche nur bei langsamen Temperaturänderungen beherrscht werden konnten und weil man wegen der Unsicherheit der Temperierung die Reaktionstemperatur im Hinblick auf den Abstand zu der einzuhaltenden Grenztemperatur nicht optimal wählen konnte, blieben die Produktionsgeschwindigkeiten begrenzt.

Der Erfindung liegt daher die Aufgabe zugrunde, ein Verfahren der eingangs gennannten Art zu schaffen, das zuverlässige Temperierung und Auflage der Folie auf der Trägerfläche auch bei hohen Produktionsgeschwindigkeiten gestattet.

Der Stand der Technik gibt keine Hinweise auf die Mittel, die zur Lösung dieser Aufgabe führen können.

Die DE—A—1 629 802 beschäftigt sich mit einem Verfahren zum Vergüten von thermoplastischen Kunststofffolien durch Erhitzung in einen Temperaturbereich, in welchem sie nur noch geringe Formfestigkeit aufweisen. Sie stellt als Nachteil vorbekannter Verfahren, fest, daß die Temperierung von der Trägerwalze her zu ungleichmäßiger Erwärmung führt, weil die Folie sich infolge der Wärmedehnung teilweise von der Trägerwalze abhebt. Statt dessen schlägt sie vor, die Folie nur von der der Trägerwalze abgewandten Seite her zu erhitzen, während die Trägerwalze am Wärmeaustausch nicht teilnimmt. Die Erhitzung erfolgt beispielsweise durch Strahlung, deren Effekt unabhängig davon ist, ob die Folie stellenweise von der Trägerwalze abgehoben ist. Die Trägerwalze ist mit einem antiadhäsiven Belag versehen, der das Ankleben der Folie und damit die Bildung von Poren oder Löchern beim Abheben der Folie im Anschluß an die Behandlung verhindern soll. Für die Vermeidung der Wellenbildung während der Erwärmung ist dieser Belag nicht geeignet; denn die trockene Reibung ist auch bei Werkstoffen mit niedrigem Reibungskoeffizienten noch zu hoch, als daß die Wellenbildungskräfte zu einer Verschiebung der Folie führen könnten, insbesondere bei dünnen Folien. — Dieser Schrift läßt sich daher für das der Erfindung zugrundeliegende Problem lediglich die Lehre entnehmen, die Temperierung der Folie von der der Trägerfläche abgewandten Seite her vorzunehmen, wobei eine Wellenbildung nicht verhindert werden kann.

Bei einem anderen bekannten Verfahren zum Veredeln einer bahnförmigen Folie (DE—A—2 233 258) hat man aus der Einsicht heraus, daß bei loser Auflage der Folienbahn auf der Trägerwalze eine Wellenbildung nicht zu vermeiden ist, vorgesehen, daß die Bahn für die Dauer der Behandlung haftfest durch ein Klebmittel oder elektrostatische Kräfte mit der Trägerwalze verbunden wird. Die Verwendung eines Klebmittels ist nur bei sehr langsamen Verfahren vorstellbar und schließt im allgemeinen auch hohe Oberflächenqualität der zu behandelnden Folie und der Trägerfläche aus. Außerdem hat man bei der elektrostatischen Haftung eines geschmolzenen Films auf einer Trägerwalze (DE—A—2 038 718) festgestellt, daß die elektrostatische Kraft und demzufolge auch die Haftwirkung ungleichmäßig ist und daß lokale Oberflächenfehler auftreten (DE—A—27 30 522, Seite 6). In der Praxis werden deshalb in der Folienherstellung beim Auftragen eines geschmolzenen Films auf eine abschreckende Trägerfläche solche Verfahren bevorzugt, bei denen zwischen dem Film und der Trägerfläche eine dünne Flüssigkeitsschicht vorgesehen wird (DE—C—1 023 579; DE—B—1 504 030), die neben der Verbesserung des Wärmeübergangs und der Oberflächenqualität den Zweck hat, die Haftung des Films auf der Trägerfläche zu verbessern, wobei Schichtdicken von wenigen 0,001 mm und jedenfalls unter 0,01 mm verwendet werden (DE—A—2 401 960; DE—A—2 730 522; GB—A—1 140 175). Die durch eine dünne Flüssigkeitsschicht erzielte Haftung mag zwar dazu ausreichen, die flache Lage des Films unter Schrumpfbedingungen aufrechtzuerhalten, wie sie bei der Abkühlung eines aus der Schmelze erstarrenden Films vorliegen; sie reicht aber nicht dazu aus, die Flachlage einer Polie unter Dehnung derselben zu gewährleisten.

Schließlich ist es bekannt, eine laufende Folienbahn durch eine Flüssigkeit (DE—B2—17 83 088) oder durch Gasdruck (DE—A—1 404 471) zu unterstützen. Diese Mittel sind aber nur dann anwendbar, wenn entweder die Bahn sehr hohe Eingenfestigkeit aufweist, wie man dies bei der Plasmastrahlbehandlung einer Metallfolienbahn voraussetzen kann, oder wenn es auf die Führungs- und Formhaltungsqualität nicht sonderlich ankommt.

Demgegenüber findet die Erfindung die Lösung der angegebenen Aufgabe darin, daß zwischen der Folienbahn und der Trägerfläche eine Flüssigkeitsschicht solcher Dicke (nämlich be Wasser mindestens 0,01 mm) vorgesehen wird, daß die Folie ihrer Dehnung bei der Erwärmung ohne Änderung ihrer flachen Lage durch Verschiebung nachgeben kann.

In Gegensatz zum Stand der Technik, bei dem die Flüsigkeitsschicht zwischen der Trägerfläche und der Folienbahn zur Erhöhung der gegenseitigen Haftung genutzt wird, wird durch die erfindungsgemäße, geringfügige Verstärkung der Dikke des Flüssigkeitsfilms auf mindestens 0,01 mm, vorzugsweise mehr als 0,02 mm, die Wellenbildung bei der durch Erwärmung der Folie stattfindenden Dehnung verhindert, obwohl wegen dieser größeren Dicke der Flüssigkeitsschicht deren Fähigkeit, die Folie an der Trägerfläche festzuhalten, verringert ist. Offenbar beruht die Wirkung der Erfindung auf zwei gegensätzlichen Eigenschaften der gegenüber dem Stand der Technik dickeren Flüssigkeitsschicht. Zum einen wird die Haftung zwischen Folie und Trägerfläche herabgesetzt mit dem Erfolg, daß die Folie den Dehnungen durch Verschiebung auf der Trägerfläche nachgeben kann. Zum anderen bleibt aber eine gewisse Haftwirkung erhalten. Will nämlich die Folie unter dem Einfluß der Dehnung an irgendeiner Stelle sich wellenförmig von der Trägerfläche abheben, so würde sich das zwischen ihr und der Trägerfläche eingeschlossene Volumen an dieser Stelle vergrößern, was nur dann denkbar ist, wenn Flüssigkeit aus den umliegenden Bereichen nachströmt oder ein torricellisches Vakuum entsteht. Die Nachströmung der Flüssigkeit ist in der Kürze der Zeit bei der immer noch verhältnismäßig geringen Dicke der Flüssigkeitsschicht nicht möglich. Ein torricellisches Vakuum kann nicht entstehen, solange der Dampfdruck der Flüssigkeit ausreichend niedrig ist.

In mechanischer Hinsicht wird daher die an sich bekannte Flüssigkeitsschicht im Rahmen der Erfindung unter veränderten Verfahrensvoraussetzungen in neuer Weise genutzt. In thermischer Hinsicht bleiben die vorteilhaften Eigenschaften der Flüssigkeitsschicht, nämlich verbesserter und gleichmäßigerer Wärmeübergang erhalten. Dies erlaubt es, die Folie durch die Trägerfläche in verhältnismäßig engen Grenzen zu temperieren und damit bei der optimalen Reaktionstemperatur nahe den gegebenen Temperaturgrenzen mit hoher Geschwindigkeit zu behandeln.

Zum Aufheizen der Folienbahn von einer niedrigen Temperatur auf die Behandlungstemperatur kann es zweckmäßig sein, sie vor dem Auflaufen auf die Trägerfläche vorzutemperieren, damit um so weniger Dehnung der Folie im Kontakt mit der Trägerfläche stattfinden muß und die Temperierung dank geringerer Wärmestromdichte genauer sein kann.

Bei der Verwendung von Wasser und solchen Flüssigkeiten, die eine dem Wasser vergleichbare Viskosität aufweisen, liegt die mittlere Schicktdicke zweckmäßigerweise im Bereich von 0,05 mm.

Ferner ist es vorteilhaft, wenn der die Trägerfläche bildende Werkstoff und die Flüssigkeit so ausgewählt werden, daß sie eine hohe gegenseitige Adhäsion aufweisen. Die Adhäsion kann dadurch gesteigert werden, daß die Trägerfläche mikrorauh ausgebildet wird, namlich mit einer Rauhtiefe von beispielsweise etwa 0,01 mm.

Die Trägerfläche wird zweckmäßigerweise von einer Walze gebildet. Jedoch kann auch ein Trägerband vorgesehen werden.

Obwohl die Flüssigkeit im Hinblick auf ihre mechanischen und thermischen Funktionen entweder auf die Trägerfläche oder auf die Folienbahn oder auf beide aufgetragen werden kann, wie dies auch der Stand der Technik zeigt, bevorzugt die Erfindung in bestimmten Anwendungsfällen den Auftrag der Flüssigkeit auf die Folienbahn. Das hat die Wirkung, daß der über den Rand der Folienbahn hinausstehende Teil der Trägerfläche von der Flüssigkeit im wesentlichen freigehalten wird, und daher im Behandlungsbereich nur ein sehr geringer Teil dieser Flüssigkeit verdampfen kann. Dies ist wichtig bei solchen Behandlungen, bei denen die Anwesenheit von Flüssigkeitsdampf im Anwendungsbereich stören könnte, wie beispielsweise bei Strahlenbehandlung in Wellenlängenbereichen, in denen der Flüssigkeitsdampf absorbierend wirkt oder wenn aus dem Flüssigkeitsdampf durch Strahlung schädliche Stoffe (beipsielsweise Ozon) abgespalten werden.

Nach der Behandlung verbleibt ein Teil der Flüssigkeit an der Trägerfläche, ein anderer Teil wird mit der ablaufenden Folienbahn fortgeführt. Die an der Folie haftende Flüssigkeit kann abgerakelt und dem Flüssigkkeitsanragswerk wieder zugeführt werden. Die an der Trägerfläche haftende Flüssigkeit kann ggf. daran verbleiben oder ebenfalls durch Rakel entfernt und ausgetauscht werden.

Eine für den Einzelfall geeignete Flüssigkeitsmenge bzw. Schichtdicke läßt sich durch Versuch leicht ermitteln.

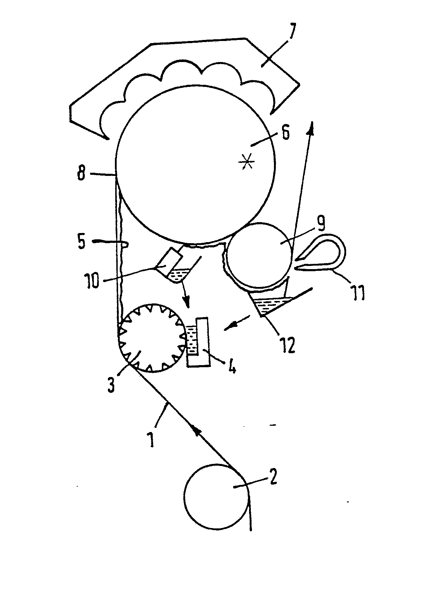

Die Erfindung wird im folgenden näher unter Bezugnahme auf die Zeichnung erläutert, die in einer Figur eine schematische Seitenansicht einer zur Durchführung des erfindungsgemäßen Verfahrens geeignete Vorrichtung zeigt.

Die Folienbahn 1 läuft aus dem durch die Walze 2 angedeuteten Beschichtungswerk in Pfeilrichtung über ein Wasserantragswerk, das aus einer Wasserantragswalze 3 und einem Wasserantragskasten 4 besteht. Das Wasserantragswerk bildet einen gleichmäßigen Wasserfilm 5 auf der Folie. Anschließend wird die Folie von einer Kühlwalze 6 übernommen, wobei der Wasserfilm 5 eine gleichmäßige Vermittlungsschicht zwischen der Walzenoberfläche und der Folie 1 bildet und durch die Behandlungszone geführt wird, die in einer oberhalb der Kühlwalze 4 angeordneten Strahlungseinrichtung 7 gebildet ist, durch die die auf der ihr zugewandten Seite der Folie aufgetragene Beschichtung getrocknet und/ oder vernetzt wird, wobei die notwendige Kühlung der Folie durch die Kühlwalze 6 sichergestellt ist. Wenn während der Behandlung eine Dehnung der Folie auftritt, so kann diese auf der Oberfläche der Walze sich dank der durch den Flüssigkeitsfilm verminderten Reibung ggf. verschieben, ohne stellenweise den Kontakt mit der Walzenoberfläche bzw. dem Flüssigkeitsfilm zu verlieren. Dabei ist Wasser is ausreichender Menge an der Stelle 8 vorhanden, an der die Folie auf die Kühlwalze 6 aufläuft, damit keine Luft in den Spalt hineingezogen wird.

Durch eine Leitwalze 9 wird die Folie 1 von der Kühlwalze 6 abgenommen, wobei jeweils ein Teil des Wassers an der Walzen- unde Folienoberfläche verbleibt. Das an der Walze verbleibende Wasser kann daran belassen verden, um es der Auflaufsteele 8 unmittelbar wieder zuzuführen. Im dargestellten Beispiel ist statt dessen eine Rakeleinrichtung 10 vorgesehen, die diese Flüssigkeit von der Walzenoberfläche abnimmt, im sie dem Antragswerk 3, 4 wieder zuzuführen. Das an der Folie haftende Wasser wirde durch eine Luftdüse 11 abgenommen, die auch die vom Wasser befreite Folienoberfläche trocknet. Das Wasser wird dann über eine Auffangwanne 12 ebenfalls dem Wassertragswerk 3, 4 wieder zugeführt. Im Wasserkreislauf kann eine nicht gezeigte Einrichtung zum Kühlen oder Heizen des Wassers vorgesehen sein.

Bei einem anderen Verfahren, das prinzipiell die gleiche Vorrichtung benutzt, wird die zu vernetzende Folienbahn 1 durch die Flüssigkeitsantragswalze 3 und die aufgebrachte Flüssigkeit, ggf. vorher auch schon durch die Walze 2, vortemperiert auf die Reaktionstemperatur, die beispielsweise bei 130° C liegt. Die Walze 6 sorgt dafür, daß diese Temperatur in engen Grenzen erhalten bleibt, auch wenn durch den Kaltstrahler 1 oder endogen durch die chemische Reaktion innerhalb der Folie Wärme frei wird.

**Patentansprüche**

1. Verfahren zum Behandeln einer Folienbahn innerhalb eines engen Temperaturintervalls nahe ihrer Erweichungstemperatur unter Wärmezufuhr, bei dem die Folie im festen Zustand auf eine die Behandlungstemperatur aufweisende Trägerfläche aufgeführt, flach auf der mit ihr bewegten Trägerfläche aufliegend im Behandlungstemperaturintervall gehalten und nach der Behandlung wieder abgeführt wird, dadurch gekennzeichnet, daß zwischen der Folienbahn und der Trägerfläche eine Flüssigkeitsschicht solcher Dicke (nämlich bei Wasser mindestens 0,01 mm) vorgesehen wird, daß die Folie ihrer Dehnung bei der Erwärmung ohne Änderung ihrer flachen Lage durch Verschiebung nachgeben kann.

2. Verfahren nach Anspruch 1, dadurch gekennzeichnet, daß die mittlere Schichtdicke der Flüssigkeit größer als etwa 0,02 mm ist.

3. Verfahren nach Anspruch 1 oder 2, dadurch gekennzeichnet, daß ein die Trägerfläche bildender Werkstoff und eine Flüssigkeit mit hoher gegenseitiger Adhäsion ausgewählt werden.

4. Verfahren nach einem der Ansprüche 1 bis 3, dadurch gekennzeichnet, daß die Trägerfläche mikrorauh ausgebildet wird.

5. Verfahren nach einem der Ansprüche 1 bis 4, dadurch gekennzeichnet, daß die Trägerfläche von einer Walze gebildet wird.

6. Verfahren nach einem der Ansprüche 1 bis 4, dadurch gekennzeichnet, daß die Trägerfläche von einem Förderband gebildet wird.

7. Verfahren nach einem der Ansprüche 1 bis 6, dadurch gekennzeichnet, daß die Flüssigkeit auf die Folienbahn aufgetragen und der über den Rand der Folienbahn hinausstehende Teil der Trägerfläche von der Flüssigkeit im wesentlichen frei gehalten wird.

8. Verfahren nach einem der Ansprüche 1 bis 7, dadurch gekennzeichnet, daß die Folienbahn vor dem Auflegen auf die Trägerfläche vortemperiert wird.

**Claims**

1. Method for the treatment of a web of sheet material within a narrow temperature range close to its softening temperature with the supply of heat, in which the sheet material is led in the solid state to a support surface which is at the treatment temperature, is kept in the treatment temperature range lying flat on the support surface moving therewith and after the treatment is discharged, characterised in that provided between the web of sheet material and the support surface is a layer of liquid of such thickness (namely in the case of water at least 0.01 mm) that as it becomes warmer the sheet material may undergo its expansion by shifting without changing its flat position.

2. Method according to Claim 1, characterised in that the average thickness of the layer of liquid is greater than approximately 0.02 mm.

3. Method according to Claim 1 or 2, characterised in that a material forming the support surface and a liquid with high mutual adhesion are chosen.

4. Method according to one of Claim 1 to 3, characterised in that the support surface is constructed so that it is micro-rough.

5. Method according to one of Claims 1 to 4, characterised in that the support surface is formed by a roller.

6. Method according to one of Claims 1 to 4, characterised in that the support surface is formed by a conveyor belt.

7. Method according to one of Claims 1 to 6, characterised in that the liquid is applied to the web of sheet material and the part of the support surface projecting beyond the edge of the web of sheet material is kept substantially free of liquid.

8. Method according to one of Claims 1 to 7, characterised in that the web of sheet material is pre-tempered before being applied to the support surface.

**Revendications**

1. Prcédé pour le traitement d'une feuille continue dans les limites d'un intervalle étroit de température au voisinage de sa température de ramollissement avec apport de chaleur, procédé dans lequel la feuille à l'état solide est amenée sur une surface d'appui qui présente la température de traitement est maintenue dans l'intervalle de température de traitement en portant à plat sur la surface d'appui qui se déplace avec elle est remmenée à la suite du traitement, caractérisé en ce qu'il est prévu, entre le feuille continue, et la surface d'appui, une couche de liquide ayant une épaisseur (à savoir 0,01 mm au moins dans le cas de l'eau) telle que la dilatation de la feuille sous l'influence de la chaleur puisse être absorbée par déplacement, sans modification de sa position à plat.

2. Procédé selon la revendication 1, caractérisé en ce que l'épaisseur de couche moyenne du liquide est supérieure à 0,02 mm environ.

3. Procédé selon la revendication 1 ou 2, caractérisé en ce que la matière qui constitue la surface d'appui et le liquide sont choisis de telle manière qu'ils présentent une forte adhérence mutuelle.

4. Procédé selon l'une quelconque des revendications 1 à 3, caractérisé en ce que la surface d'appui est réalisée avec des microrugosités.

5. Procédé selon l'une quelconque des revendications 1 à 4, caractérisé en ce que la surface d'appui est constituée par un cylindre.

6. Procédé selon l'une quelconque des revendications 1 à 4, caractérisé en ce que la surface d'appui est constituée par une bande transporteuse.

7. Procédé selon l'une quelconque des revendications 1 à 6, caractérisé en ce que le liquide est appliqué sur la feuille continue et la partie de la surface d'appui qui dépasse les bords de la feuille continue est maintenue partiquement exempte de liquide.

8. Procédé selon l'une quelconque des revendications 1 à 7, caractérisé en ce que la feuille continue est soumise à un pré-équilibrage de température avant d'être appliquée sur la surface d'appui.